**Europäisches Patentamt**

**European Patent Office**

**Office européen des brevets**

(19)

(11) Publication number: **0 516 459 A2**

# (12) EUROPEAN PATENT APPLICATION

(21) Application number: **92304928.2**

(22) Date of filing: **29.05.92**

(51) Int. Cl.⁵: **H04N 1/32**

(30) Priority: **30.05.91 US 707650**

(43) Date of publication of application:
**02.12.92 Bulletin 92/49**

(84) Designated Contracting States:
**DE FR GB IT**

(72) Inventor: **Schwaderer, William David**
**1520 Avenida Ladera**
**El Cajon, California 92020 (US)**

(74) Representative: **Williams, Trevor John**
**J.A. KEMP & CO. 14 South Square Gray's Inn**
**London WC1R 5LX (GB)**

(71) Applicant: **Schwaderer, Helen B.**
**1520 Avenida Ladera**
**El Cajon, California 92020 (US)**

(54) **Facsimile server with manual call release emulation.**

(57)  A facsimile server includes circuitry for prompting a caller to send or receive one or more facsimile transmissions. Circuitry is included for sending facsimile transmissions and receiving facsimile transmissions. Call release is implemented solely by manual call release emulation. Provision may also be made for requesting and responding to DTMF or voice responses made by a caller.

Figure 1

EP 0 516 459 A2

## BACKGROUND OF THE INVENTION

### 1. Field Of The Invention

The present invention relates to interactive facsimile servers. More specifically, the present invention relates to interactive facsimile servers which can participate in multiple facsimile message transmissions or receptions with individual facsimile devices on the same telephone call.

### 2. The Prior Art

An interactive facsimile server (hereinafter referred to as a "FAX server") is a system that attaches to a telephone network to provide callers with facsimile services. Such a telephone network may be a private or public switched telephone network. The services a FAX server provides to callers include receiving, storage, and retrieval of facsimile messages on demand by callers.

Through various means, FAX servers typically interact with push-button telephone callers and facsimile-capable devices (hereinafter referred to as "FAX devices"). To provide facsimile service, a FAX server typically communicates with a-FAX device after first interacting with a caller. To deliver the facsimile message, the FAX device may use the same telephone line the caller previously used to call the FAX server. Or, the line may be wholly a separate line, perhaps controlled by completely different telephone network.

Through such means, FAX servers allow authorized callers to store facsimile messages into caller-selected storage areas available to the FAX server. FAX servers also allow authorized callers to retrieve previously-stored facsimile messages from the FAX server's one or more such storage areas.

For space reasons, a FAX server may store facsimile messages in a CCITT Recommendation T.4 format for CCITT Group 3 FAX Devices and CCITT Recommendation T.5 format for CCITT Group 4 FAX devices, though this is not necessary. FAX servers can also dynamically create facsimile messages from information obtained from other sources. These sources include computers. A FAX server may connect to a computers using Local Area Networks (LAN networks) as well as public or private switched networks.

A FAX server also may employ Non Standard Facilities (hereinafter referred to as NSF) as provided for in the CCITT Recommendation T.30. In such instances, a FAX server may transmit messages in a variety of formats using a variety of procedures without regard to CCITT recommendations. Otherwise, a FAX server receives and transmits CCITT Recommendation T.4 format facsimile messages to CCITT Group 3 FAX Devices, and CCITT Recommendation T.5 format facsimile messages to CCITT Group 4 FAX Devices in conformance with the CCITT T.30 procedures.

FAX server devices are known in the prior art. For example, Japanese Kokai Patent Publication No. 57-152072, published September 20, 1982 describes an audio response/video retrieval composite processing system. Devices that embody this invention can provide push-button phone callers with audio and facsimile information.

The example FAX server described in Japanese Kokai Patent Publication No. 57-152072 provides real estate information. Realtors call a FAX server with push-button phones to obtain property listing information meeting various criteria. Realtors specify criteria such as desired property location and asking price by pushing telephone push-buttons in response to audio prompts.

When the FAX server eventually locates a property of potential interest, the FAX server provides a spoken description of it to the realtor over the phone. If the caller additionally wants property floor plans, the system instructs the realtor to hang up. The FAX server then uses the realtor's pre-registered FAX device machine telephone number to call the realtor's FAX device and deliver floor plan drawings.

The scheme described in the Kokai suffers from the disadvantage that the information is furnished by the FAX server with a return telephone call (hereinafter referred to as a call back). This feature may be a significant impediment to the usefulness of the FAX server. For example, the caller may be in another country and the call back may be very expensive for the FAX server owner. In addition, when the FAX device is called back, it may be busy, complicating the delivery function of the FAX server.

United States Patent 4,918,722 to Duehren et al. also describes FAX servers that interact with push-button callers. According to one embodiment described in this patent, the caller specifies a FAX device telephone number to which to deliver requested facsimile information. This reference also teaches transmitting information to the caller's FAX device attached to the same telephone line on which the caller is conducting audio communications with the FAX server. The transmission occurs during the same call in which the FAX server was contacted.

FAX servers which only support push-button caller interaction and return facsimile messages on the same call are popular today. This is partially because of the ease with which such a FAX server can be built. Most presently-available FAX servers typically operate in a similar fashion. After interacting with a caller calling from a FAX device with push-button telephone capability, the FAX server instructs the caller to push the "Start Button" on his FAX device and hang up the phone hand set.

The procedure just described only allows a caller to send or receive one facsimile message per call. This message, by CCITT definition, may consist of one or more documents, each with one or more pages. If another interaction is required, the caller must make one or more additional calls to the FAX server and make another single request per call. Additional calls are plainly required when the specific information required can only be identified by a caller by examining facsimile message(s) returned by the FAX server on a prior call(s).

An example of such a transaction is a catalog sale where an index must be obtained. Callers first search the index, using it to locate specific items in the catalog. Obtaining information from the FAX server concerning subsequent items of interest requires subsequent calls.

This scheme suffers from several disadvantages. First, the caller may be calling long distance. Multiple dialing and preliminary interaction processes with the FAX server may prove time consuming as well as tedious. Consequently, callers may make dialing and specification errors. In addition, the caller may necessarily pay for several calls, each of which may have higher charges for initial minutes than subsequent ones. Thus multiple calls cost more than a single call.

Finally, to alleviate the cost of calling FAX servers, many FAX servers are accessible via Area Code 800 telephone numbers. Because international callers cannot generally call these numbers, these FAX servers are unavailable to many foreign callers.

United States Patent 4,893,333 to Baran et al. also discloses traditional FAX server capabilities. However, the primary thrust of the Baran et al. patent is the application of optical character reading (OCR) and optical mark reading (OMR) technology to received facsimile messages.

A FAX server embodying this approach first receives one or more facsimile messages (hereinafter referred to as "selector sheets") from a caller's FAX device. The FAX server applies an OCR and OMR analysis of the received facsimile message(s). In this manner, the FAX server selects the messages to transmit to the caller's FAX device.

Baran et al. attempt to reconcile the problem of returning requested facsimile messages to the caller's FAX device. They disclose a variety of techniques directed to this effort. To return information during the same call, the caller's FAX device must first transmit a facsimile in "polling mode". In this situation, Baran et al. disclose, among many other things, the use of turn-around polling by the FAX server. In this approach, a FAX server first receives the selector sheet facsimile message(s) sent in polling mode. The FAX server next decompresses the facsimile message, analyzes it with OCR and OMR techniques, and otherwise processes it.

The FAX server must begin to transmit the appropriate facsimile message(s) to the caller's FAX device before a CCITT protocol timeout occurs or hang up will occur. In this instance, the specified period before a timeout occurs is six seconds, plus or minus one second. However, the turn-around polling approach is simply not practical because of the stringent CCITT timeout which aborts the connection when exceeded. Its short duration forces FAX servers exploiting turn-around polling to use expensive hardware accelerators and unnecessarily expensive processing platforms. All this is required to analyze a single facsimile message before a timeout occurs. Yet, in a single call a caller may transmit multiple facsimile messages that each require analysis before any facsimile can be returned.

In this circumstance, there is little if any hope of analyzing multiple messages economically with today's hardware before the timeout period elapses. In addition, the turnaround polling feature is not present on many FAX devices, and is reportedly being eliminated on new versions of FAX device models that previously had it. In practice, if a FAX device does have turn-around polling, a caller may be ignorant of the feature, may be aware of the feature but be unaware of its presence, prefer not to use it, or not know that it should be used with a specific FAX server.

Finally, the turn-around polling feature may be present, the caller may be aware of it and how to use it but simply does not use it. For these and other reasons, turn-around polling has proven unacceptable as a commercial solution to returning facsimile responses on the same call.

Baran et al. teach away from push-button calls in favor of support of OCR and OMR processing. Baran et al. also propose an NSF approach to address the turn-around problem, which is likely to prove unwieldy.

The inability of current FAX server art to conduct more than one facsimile transmission or reception on a single call also adversely impacts system administrators. Such individuals may have to load many FAX messages into the FAX server. Each document load activity may require an individual call and authorization procedure to verify the identity of the administrator and the correct storage location of the facsimile message. Otherwise, cumbersome manual procedures may be required to separate individual messages that are transmitted together in one facsimile transmission.

To return facsimile messages on a second call (hereinafter referred to as "call back mode"), a FAX server must determine the number of the caller's FAX device. The approaches Baran et al. teach use of ANI automatic number recognition means for extracting the telephone number of the CCITT transceiver from the handshake signals received by the FAX server from the CCITT FAX transceiver. Since CCITT FAX transceivers do not provide ANI information, this approach is impractical.

In addition, Baran et al. discuss capturing and using the internal telephone number referred to as a "calling subscriber identification". This number is stored in many FAX devices and exchanged during CCITT recommendation T.30 messages. Baran et al. notes it is not always available, complete, or even correct. Thus, depending on this number to provide a FAX device number to return facsimile information to on a call back is not practical.

Baran et al. also suggest that a FAX server can determine the number from OCR analysis on the handwritten form, but admits that this is not always reliable as well. Moreover, because of the unreliability of obtaining return FAX device numbers, customer service costs are significant since delivery problems must be solved manually, often by operators visually examining the facsimile message sent by the caller's FAX device.

Finally, Baran et al. suggest that callers can call twice. A first call is used to transmit a selector sheet to a FAX server, and a second call is used to fetch the information. Baran et al. suggest that the two calls could be "logically related automatically" using the internal number stored in the FAX device.

Since Baran et al. also concede that the number may not be available, this approach seems unlikely to succeed. This is particularly true since there is nothing to prevent two different FAX devices from having the same internal telephone numbers. Clearly, this approach exhibits obvious usability problems as does a normal push-button interactive FAX server that requires multiple calls to obtain information.

In the final analysis, the prior art has failed to teach a FAX server which provides a satisfactory solution to sending and receiving multiple facsimile messages on a single call. This is a side effect of the CCITT Recommendation T.30 facsimile procedures which require call release at the completion of a facsimile transmission. A solution to this problem would comprise an enormous leap in usability and functionality for FAX servers.

Objects and Advantages

Accordingly, it is an object of the present invention to provide an economical FAX server that rapidly provides multiple facsimile message exchanges on a single call from a FAX device with an integrated handset or with attached telephone and whose operator typically only needs to keep the handset off-hook during facsimile message exchanges.

It is a further object of the invention to provide a FAX server which provides a means to have callers bear the entire burden of all communication costs, regardless of how many FAX server requests they may make.

Yet another object of the invention is to provide a FAX server which provides a means to efficiently perform FAX server message loading and other administration activities.

Another object of the invention is to provide a FAX server which provides the potential of minimizing the call costs born by the caller and provides improved usability factors in facsimile message OCR and OMR analysis applications.

Further objects and advantages of the present invention will become apparent from a consideration of the drawings and ensuing description.

BRIEF DESCRIPTION OF THE INVENTION

According to the present invention, a FAX server includes FAX transmitting means, FAX receiving means, and manual call release emulating means. Means are also provided for delivering an automated prompt to the caller. In a presently preferred embodiment of the invention, means may be provided for prompting which may request and process DTMF/voice response requests from a caller.

The present invention teaches that using manual call release emulation enables other subsequent activities to occur after a FAX server transmits or receives a FAX message. By providing emulation of manual call release following facsimile message exchange, many callers can regain communication following a facsimile message exchange with facsimile server apparatuses that embody the invention. The caller typically needs only to keep their phone handset off-hook to regain communication with a FAX Server after FAX message transmission. Previously, callers had to hang up after a single facsimile message exchange and call the shared facsimile server again to regain communication with it. Now they can exchange multiple facsimile messages on a single call.

The FAX server of the present invention rapidly provides multiple facsimile message exchanges on a single call from a FAX device with an integrated handset or with attached telephone and whose operator typically only needs to keep the handset off-hook during facsimile message exchanges. Callers using the FAX server of the present invention bear the entire burden of all communication costs, regardless of how many FAX server requests they may make. The FAX server of the present invention provides a means to efficiently perform FAX server message loading and other administration activities and minimizes the call costs born by the caller.

BRIEF DESCRIPTION OF THE DRAWINGS

FIG. 1 is a block diagram illustrating the typical interconnection between facsimile units and FAX servers.

FIG. 2 is a block diagram of a preferred FAX server implementation that can embody the present invention.

FIG. 3 is a flow chart illustrating the use of the present invention for remote FAX operators to exercise FAX server transmission and reception capabilities.

FIG. 4 is a block diagram of an alternate embodiment of a preferred FAX server implementation that can embody the present invention.

FIG. 5 is a flow chart illustrating the utilization of DTMF responses by a caller to FAX server audio prompts according to the present invention.

DETAILED DESCRIPTION OF A PREFERRED EMBODIMENT

Those of ordinary skill in the art will realize that the following description of the present invention is illustrative only and is not intended to be in any way limiting. Other embodiments of the invention will readily suggest themselves to such skilled persons from an examination of the within disclosure.

Facsimile servers interact with callers using a variety of interactions including transmitting and receiving facsimile messages. An understanding of the interaction will facilitate an understanding and appreciation of the operation of the present invention.

In this invention, FAX devices are devices that have unmodified CCITT Group 3 or Group 4 transceivers and follow the internationally accepted CCITT recommendation T.30 procedures for document facsimile transmission. This document is expressly incorporated herein by reference.

FAX devices that observe CCITT Recommendation T.30 (expressly incorporated herein by reference), including FAX machines and FAX servers, partition their transmission and reception activities into five distinct phases. Phase A is Call Establishment where FAX devices establish connection. Phase B is the Pre-Message procedure where FAX devices identify and select the capabilities they will use in the Message Transmission phase. Phase C is Message Transmission where the facsimile messages are transmitted and received subject to synchronization, error detection, correction and line supervision procedures. Phase D is the Post Message procedure where end-of-message, confirmation, multi-page, and end-of-facsimile procedure signalling occurs. Phase E is Call Release in which the call is released.

In section 2.3.6 titled "Phase E - Call Release", the CCITT T.30 Recommendation states that "Call release shall be realized manually and/or automatically." Because present FAX servers are typically completely automatic devices, there is no manual call release mechanism (associated handset) available. Therefore, manual call release must be emulated and automatic call release in Phase E must be disabled. The act of emulating manual call release is herein defined as "manual call release emulation."

Present FAX servers release calls automatically after entering Phase E (Call Release). This release prevents callers from further interacting with a FAX server on the same call. According to the present invention, it has been realized that there is great advantage in not automatically releasing a call shortly after entering Phase E. According to the present invention, the subsequent call release occurs as a result of manual call release emulation by the FAX server. This allows the FAX server to operate in the environment of the present invention and to also remain completely compliant with CCITT Recommendation T.30.

By not releasing calls automatically after entering Phase E, FAX servers can continue to interact on a single call with callers that call from FAX machines with integrated handsets or with attached telephones. These interactions can include multiple subsequent FAX transmissions and receptions. The caller typically only needs to keep their phone handset off-hook to regain communication with a FAX Server after FAX message transmission.

FAX servers that provide manual call release emulation according to the present invention disable the capability of their FAX apparatus from disconnecting the call at the end of FAX operations. Thus, they prohibit the FAX server apparatus from automatically releasing calls as part of facsimile message transmission or reception.

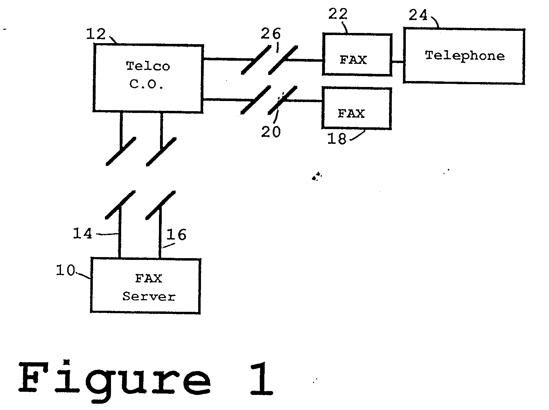

Referring first to FIG. 1, a block diagram illustrates typical connections between a facsimile unit and a FAX server. A typical FAX server 10 connects to the central office equipment 12 of a telephone company via a first telephone line 14 and a second telephone line 16. In the embodiment shown in FIG. 1, FAX server 10 only accepts calls on line 14. FAX server 10 only places calls on line 16.

As is well known in the art, FAX servers can use more than one line to receive and place call. FAX servers can also use only one line to receive calls and have no connections to place calls. In a similar fashion, FAX servers can connect to PBX units which are connected to the central office equipment 12 of a telephone company. A good description of various connection approaches can be found in United States Patent 4,918,722.

Some FAX machines are equipped with integrated telephone handsets. Such a FAX machine is illustrated at block 18 in FIG. 1, connected to central office equipment 12 via telephone line 20. Some FAX machines do not have integrated telephone handsets but provide a connector for a telephone set. This allows the combination FAX machine and telephone to provide the same functionality as FAX machines with integrated telephone handsets. Such a FAX machine is illustrated by FAX machine 22 and its associated telephone set 24 and is connected to central office equipment 12 via telephone line 26. FAX machines 18 and 22 and their associated telephone handsets can connect directly to the telephone company central office equipment 12 via telephone lines 20 and 26 as shown in FIG. 1, or through a private branch exchange (PBX) as is well known in the art.

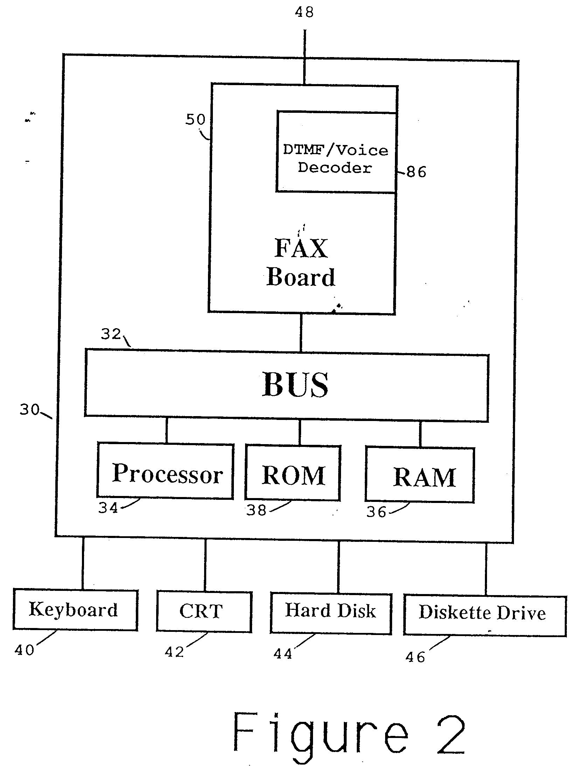

Referring now to FIG. 2, a block diagram of preferred components in a typical FAX server 10 which may be used with the present invention is shown. FAX server 10 can be configured from a "PC-AT" IBM or equivalent personal computer 30 using numerous "off-the-shelf" adapter cards. The adapter cards are inserted into slots associated with the computer bus 32 to provide a variety of support functions. The FAX server contains at least one processor 34 which communicates with random access memory (RAM) 36 and Read Only Memory (ROM) 38 via system bus 32 in a manner well known in the art.

System bus 32 provides for connection of various cards to which may then communicate with processor 34 and memories 36 and 38. The FAX server of the present invention can be optionally operated by keyboard 40 and display status and visual responses on CRT 42 under control of processor 34 in a known manner. Hard disk 44 may be used to provide facsimile message storage capability. Diskette drive 46 may be provided for the capability to install operating system and other software programs on hard disk 44, and also provides hard disk 44 backup capability. Depending on the particular configuration of computer 30, those of ordinary skill in the art will recognize that CRT 42, hard disk 44, and diskette drive 46 may require adapter cards that connect to bus 32.

According to a presently preferred embodiment of the invention, telephone line 48 interfaces with system bus 32 of computer 30 using FAX board 50. As presently preferred, FAX board 50 may be a FAXSIM evaluation board, sold as part of the FAXSIM Demonstration Software Package available from Yamaha Corporation of America, Systems Technology Division, 961 Ridder Park Drive, San Jose, California, USA 95131. Those of ordinary skill in the art will recognize where the disclosure herein refers specifically to features found on this particular FAX board and will understand the extent to which equivalent features are found on other FAX boards.

The FAXSIM Demonstration Board is an unintelligent adapter card since it has no programmable processor accessible to general programmers. If an intelligent board which incorporates a programmable processor with a board like the FAXSIM Demonstration Board components is created, multiple such cards could be inserted into a single PC-AT systems unit allowing connection to a multiplicity of telephone lines. By suitable programming, a FAX server incorporating such cards could attach to and serve several phone lines simultaneously. The techniques for doing this are well understood by intelligent facsimile board manufacturers and those skilled in the art.

There are many other obviously possible FAX server components, not included in FIG. 2 to avoid over complicating the disclosure. These components include, but are not limited to, other generally available FAX message and program storage devices, such as non-volatile RAM or CD-ROM devices, scanners to create facsimile messages stored on hard disk 44, Local Area Network (LAN) cards to attach to system bus 32 and to a LAN to allow a FAX server to use a LAN to communicate with Modem Servers, fileservers, and general purpose computers using well understood approaches. Images can also be stored on a local area network file server using known hardware and software approaches. Modem cards may be attached to system bus 32 and to an outbound call placement telephone line to allow a FAX server to use an outbound telephone line to communicate with general purpose computers using public switched network services. General computer direct connect cards would allow a FAX server to connect directly to general purpose computers using a direct connection. Such direct connect cards include but are not limited to RS-232-C adapters or IBM 3270 emulator cards that are both widely available.

An exemplary way disable automatic release according to the present invention is to modify the FAX apparatus. Following the directions accompanying the FAXSIM package, the FAX server administrator should install the FAX Board 50 and attach a phone line 48 to the FAX board 50. The hard disk 44 should be formatted with and provide MS-DOS operating system and product program support. The high address memory beyond one megabyte of RAM can be configured as a high performance disk drive by using the MS-DOS RAMDRIVE.SYS device driver or other suitable such device driver. MS-DOS is a widely available operating system from Microsoft Corporation, 16011 NE 36th Way, Box 97017, Redmond, Washington, USA 98073-9717. The hard disk 44 must have available the following FAXSIM programs that operate properly: OFFHOOK.EXE, PLAYBACK.EXE, RECORD.EXE, RECVFAX.EXE, SENDFAX.EXE, and WAITCALL.EXE. The following modules must be altered as follows and properly recompiled and linked. This may be done using the Turbo C++ C Language Compiler available from Borland International, Inc., 1800 Green Hills Road, P.O. Box 660001, Scotts Valley, CA. 95066-0001.

First, in the exit_fax routine within the YAMODEM.C module, the "on_hook();" statement must be blanked out. In the SENDFAX.C module at approximately line 150, the three successive "on_hook();", "delay(1000);", and "off_hook();" statements must be blanked out. In the RECVFAX.C module at approximately line 143, the "on_hook();" statement must be blanked out. In addition, at approximately line 152, the "if (rings >= 0)" test must be changed to "if (rings > 0)" to correct a module error. In addition, at approximately line 205, the "goto Restart;" statement must be changed to "exit_fax(1)". Finally, at approximately line 429, the "goto Restart;" statement must be blanked out.

These changes collectively remove the capability of the SENDFAX.EXE and RECVFAX.EXE programs to release calls. Thus, they prohibit the FAX server apparatus from automatically releasing calls as part of facsimile message transmission or reception. A similar process should be followed for other FAX server apparatuses or releases of the FAXSIM Demonstration Software Package to prevent them from automatically releasing calls. In this manner, the FAX server can use other means to disconnect the call and thereby emulate manual call release.

Following the directions accompanying the FAXSIM package, the FAX server administrator should execute the WAITCALL program and call the FAX server from a phone near the FAX server keyboard. After WAITCALL terminates in response to the received phone call, the phone connection remains off-hook. The administrator should record the RECEIVE.MSG and SEND.MSG prompts using the RECORD.EXE program. These digitized voice prompts are stored on hard disk 44. Suitable prompts are the word "receive" and "send" respectively. The resultant files can be listened to using the PLAYBACK.EXE function. The FAXSIM documentation describes the usage of both of these programs.

An MS-DOS batch process file named DEMO.BAT illustrates the operation of the present invention and may now be entered and saved on hard disk 44 using a text editor such as MS-DOS's EDLIN. Instructions for using the EDLIN editor are found in the MS-DOS manual. The text for DEMO.BAT follows:

```
:WaitCall
 Waitcall
:LoopTop
 PlayBack Receive
 RecvFax -f1 -r0
 If ErrorLevel 1 GoTo WaitCall
 PlayBack Send
 SendFax -f1
 If ErrorLevel 1 GoTo WaitCall
 GoTo LoopTop
```

The administrator can now initiate the FAX server demonstration capability by running the MS-DOS batch process DEMO.BAT. This is done either as an MS-DOS command entered at the MS-DOS prompt or perhaps as part of the machine's start-up AUTOEXEC.BAT.

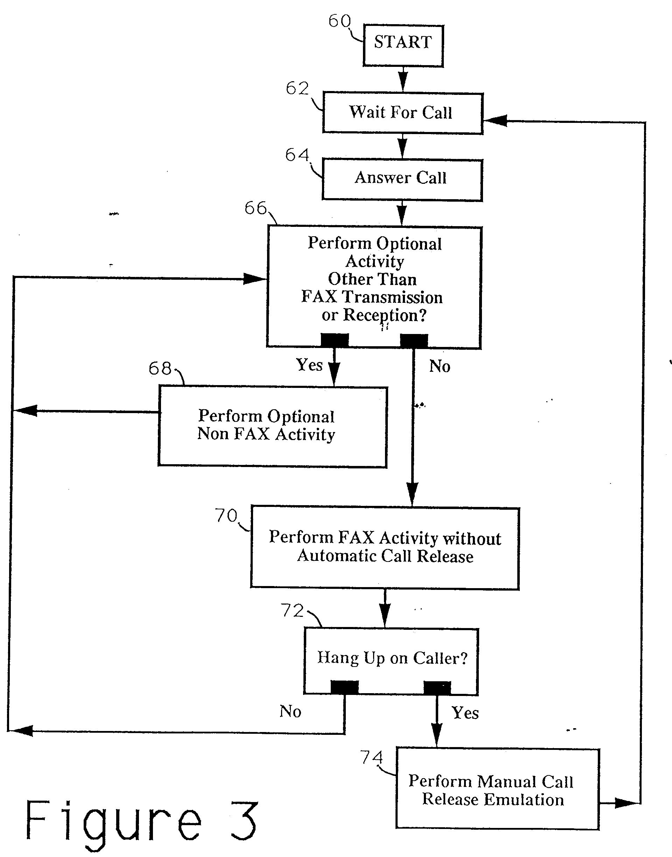

Calling FAX operators (callers) interact with the FAX server using the process illustrated in FIG. 3. They first call the FAX server using the integrated telephone handset on FAX 18 or the telephone set 24 on FAX 22 (FIG. 1). The caller needs to keep the handset off-hook during facsimile message exchanges to keep the line connected from their side.

FIG. 3 is a flowchart that illustrates the operation of a presently preferred embodiment of the invention. Block 60 is the starting point for the FAX server process. In block 62, the FAX server goes on-hook (insures the telephone line is hung up) and waits for a call from a facsimile machine operator. This is achieved by FAXSIM program WAITCALL.

In block 64, a call arrives and the WAITCALL program exits after going off-hook. In block 66, the server determines whether to perform an optional non-FAX activity such as playing a digitized greeting or prompt. This non-FAX activity is neither a FAX message transmission or reception. If the decision is to perform a non-FAX activity, it is performed in block 68 and control is returned to block 66. If the decision is not to perform an activity, the FAX transmission or reception activity occurs at block 70 without automatic call release. In block 72 the decision is made whether to hang up on the caller. If the answer is yes, manual call release emulation is per-

EP 0 516 459 A2

formed in block 74 and control is returned to block 62. Otherwise, control is returned to block 66.

This process routine will now be disclosed in more detail in the case where the FAX server executes the program DEMO.BAT and receives a FAX from a caller and then transmits a FAX to a caller.

In DEMO.BAT, the batch file audio prompts the caller with what activity it will perform. Since this is a non-FAX activity, control passes from block 66 to block 68. Since the first activity in DEMO.BAT is for the caller to transmit a FAX to the FAX server, the FAX server runs the FAXSIM program PLAYBACK in block 68 to prompt the caller with the digitized audio prompt RECEIVE.MSG. This alerts the caller to send a facsimile message.

Control passes back to block 66 and there is now no further optional activity to perform in DEMO.BAT. Therefore, control passes to block 70. There, the FAX server runs the modified FAXSIM program RECVFAX to receive the caller's facsimile message. This activity is indicated in block 70.

If the reception is successful, the FAXSIM program RECVFAX places the FAX message on hard disk 44, labels it with the appropriate MS-DOS file name, and returns to MS-DOS with an return code value of zero. The MS-DOS batch facility ERRORLEVEL is therefore zero.

In the case of an unsuccessful reception, the FAXSIM program RECVFAX returns with an return code value of one. The MS-DOS batch facility ERRORLEVEL is therefore one. In block 72, the FAX Server determines whether to hang up on the caller. This is done in DEMO.BAT by testing the ERRORLEVEL returned from the FAXSIM program RECVFAX. If it is non-zero, control is passed to block 74 where manual call release emulation is performed and control is passed to block 62 where the FAX server waits for another call.

In addition to an error in FAX reception by the FAX server, a non-zero ERRORLEVEL may be caused by the caller hanging up on the FAX server. In the event of non-zero ERRORLEVEL, the manual call release emulation is actually performed by the WAITCALL program which goes on-hook before waiting for another call.

Alternately, if there has been no error, and the caller has not hung up on the FAX server, control is passed back to block 66 for another activity.

The second activity in DEMO.BAT is for the caller to receive a FAX from the FAX server. The non-FAX activity performed at this point in DEMO.BAT is to play the digitized SEND.MSG which alerts the caller to receive a FAX. As in the playing of RECEIVE.MSG, the playing of SEND.MSG is a non-FAX activity and control passes from block 66 to block 68.

In the case of the demonstration program DEMO.BAT, the FAX the caller receives from the FAX server is the one which the caller has just sent. However, from the DEMO.BAT example given herein, those of ordinary skill in the art will be readily enabled to write software to enable the interactive FAX server of the present invention to perform other chosen tasks.

Next, the FAX server runs the FAXSIM program PLAYBACK in block 68 to prompt the caller with the digitized audio prompt SEND.MSG. This alerts the caller that the FAX server is going to send a facsimile message. Control passes back to block 66 and there is now no optional activity to perform in DEMO.BAT.

Control now passes to block 70. There, the FAX server runs the modified FAXSIM program SENDFAX to send the caller's facsimile message. This activity is indicated in block 70.

If the transmission is successful, the FAXSIM program SENDFAX returns to MS-DOS with an return code value of zero. The MS-DOS batch facility ERRORLEVEL is therefore zero. In the case of an unsuccessful reception, the FAXSIM program SENDFAX returns with an return code value of one. The MS-DOS batch facility ERRORLEVEL is therefore one.

In block 72, the FAX Server determines whether to hang up on the caller. This is done in DEMO.BAT by testing the ERRORLEVEL returned from the FAXSIM program SENDFAX. If it is non-zero, control is passed to block 74 where manual call release emulation is performed and control is passed to block 62 where the FAX server waits for another call.

As in the case where the caller sent a FAX, the manual call release emulation after a caller receives a FAX is actually performed by the WAITCALL program which goes on-hook before waiting for another call. Alternately, control is passed back to block 66 for another activity.

DEMO.BAT theoretically never ends execution and only provides manual call release emulation when a FAX activity fails or when the caller hangs up on the FAX server after he has had enough of exercising DEMO.BAT, both of which will result in a non-zero return code to ERRORLEVEL.

In the DEMO.BAT example, caller interactions with the FAX server are limited to calling the FAX server, listening to the RECEIVE.MSG prompt, sending a facsimile message, listening to the SEND.MSG prompt, receiving the facsimile message back, and repeating the cycle as many times as the caller desires. The caller then manually releases the call causing the FAXSIM program SENDFAX or RECEIVE to exit with a non-zero MS-DOS return code.

The program DEMO.BAT therefore demonstrates the ability of the FAX server to emulate manual call release on FAX message transmissions and receptions, thereby allowing repetitive facsimile message exchanges on a single call. Note that in present prior art systems, the hang up is automatic and occurs after completing

8

a FAX activity. In the system according to the present invention as shown in FIG. 3, the decision is independent of FAX activity completion.

In more advanced systems according to the present invention, a decision to hang up on a caller could also be made based on the telephone number or area code of the caller. The decision could also be based on the time of day of the caller or the FAX server, the day of the week, the status of the caller's credit, or a myriad of other factors under software control.

For example, the caller may have entered an invalid push-button response to an previous prompt that the FAX server treats as a security violation. The caller may have made too many incorrect responses to several previous prompts, or has failed to make any response to an earlier prompt. The caller may have stayed connected to the FAX server for too long or has hung up or requested the FAX server hang up. The caller may have received a FAX item that will take a significant time to read. Perhaps FAX server call progress components have detected a released line. Perhaps the time in the caller's time zone has passed some critical value. In other words, the FAX server might release the call for a myriad of reasons not associated with any previous reasons a release might be appropriate. The extent of this concept is limited only by the imagination of the user, who needs only to include appropriate lines of code to execute the chosen hang up scenario.

These activities include subsequent FAX message transmission and reception activities. However, this approach is fully compliant with CCITT Recommendation T.30. It is important to note that call release only occurs in block 74. Calls are not released anywhere else. This is true even if CCITT Recommendation T.30 phase E was entered in a FAX activity. Calls are not released because releases are delayed pending the evaluation of an independent FAX server decision.

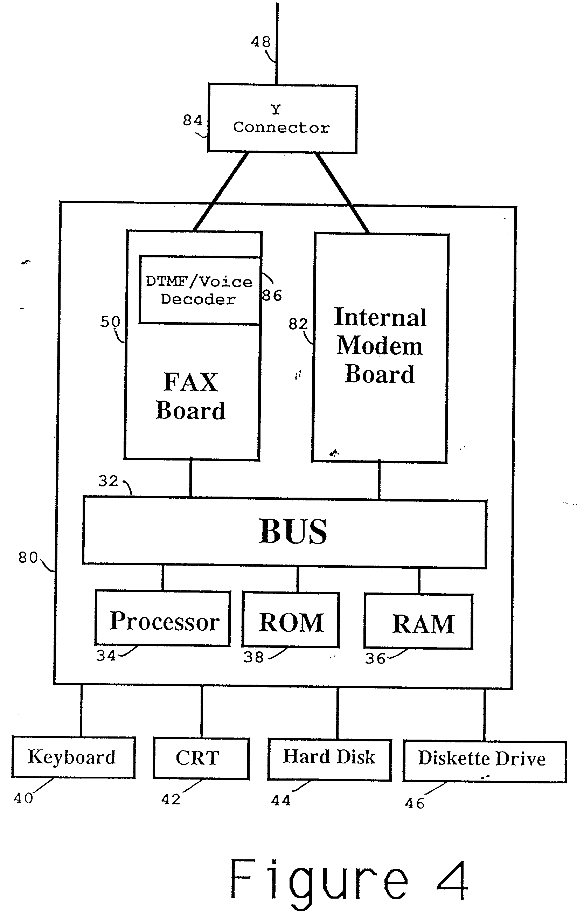

However, not all vendors provide ways to allow customers a way to modify their FAX apparatus. For FAX server systems according to the present invention built around FAX apparatus which cannot be modified, manual call release emulation must be provided another way. One such way is illustrated with reference to FIG. 4.

Referring now to FIG. 4, there is shown a block diagram of preferred components in a FAX server 80 according to an alternate embodiment of the present invention which provides another way to emulate manual call release. In addition to the components in FIG. 4 identical to those of the FAX server of FIG. 2 (which are assigned the same reference numerals as in the FAX server of FIG. 2), internal modem board 82 has been installed in the system unit. This configuration requires connecting both the FAX board 50 and the internal modem Board 82 to telephone line 48. This may be done through a "Y" connector 84 such as the Radio Shack "12 foot Modular Dual Jack Extension Cord", Catalogue Item #279-373. This mode of connection allows FAX board 50 and modem board 82 to independently keep the telephone line open.

According to a presently preferred embodiment of the invention, the internal modem Board 82 is a "Hayes Compatible" internal modem card attached to the PC-AT computer bus 32 in the usual manner. Such modem cards are well known and widely available.

The embodiment of FIG. 4 places two on/off hook controlling mechanisms in parallel on the single line, one on FAX board 50 and one on internal modem board 82. This allows FAX board 50 and modem board 82 to keep the telephone line open independently. This is similar to two telephone sets on a single telephone line, each of which can keep the line open independent of the another. y In the embodiment of FIG. 4, modem board 82 should be configured to use communication ports addressees for communication adapter 1 (COM1:). By adding the line of code "echo ATH0 >COM1:" before the WAITCALL program call in DEMO.BAT, the internal modem card 82 will go on-hook. By adding the line of code "echo ATA >COM1:" after the WAITCALL program call in DEMO.BAT, the internal modem board 82 will go off-hook. In this manner, the internal modem board 82 can independently insure that the telephone line stays off-hook, even though the FAX board 50 may hang up its connection. For FAX board 50 to use the telephone line again, the FAXSIM OFFHOOK program must be called after every FAX function that performs call release on its connection (assuming a FAXSIM Evaluation Board is used). The FAXSIM program OFFHOOK causes the FAX board 50 to go off-hook (assuming a FAXSIM Evaluation Board is used).

In this second example, DEMO.BAT would look like

```
:WaitCall
echo ATH0 >COM1:
```

```
WaitCall
echo ATA >COM1:
:LoopTop
PlayBack Receive
RecvFax -f1 -r0
If ErrorLevel 1 GoTo WaitCall
OffHook
PlayBack Send
SendFax -f1
If ErrorLevel 1 GoTo WaitCall
OffHook
GoTo LoopTop
```

Obviously, it would be more economical to build the on/off hook circuitry on the same component as the FAX apparatus. The embodiment of FIG. 4 is simply an alternate way of realizing the present invention.

One extension to the described embodiments is to interleave multiple programs between FAX server. facsimile message exchanges. For example FAX servers could prompt callers for push-button (i.e., DTMF) or voice responses in one program and collect the responses in another program. The FAX server could then interpret the responses and send appropriate facsimile messages. Techniques for these activities are well understood by present FAX server and automated telephone attendant equipment manufacturers and described in prior art.

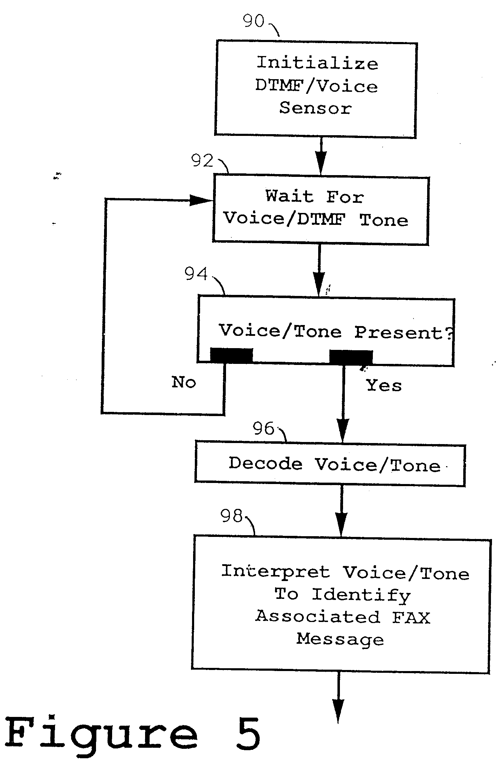

An illustrative example of such an extension is illustrated with reference to FIG. 5. Referring now to FIG. 5., a flow chart of a possible sub-process according to the present invention which may be included in step 68 of the routine of FIG. 3 is shown. The process illustrated in FIG. 5 detects DTMF or voice responses initiated by the caller pushing a button on the telephone or speaking in response to a menu in the audio prompt sent by the FAX server, and sends a FAX back to the caller in response to the caller's DTMF or voice selection.

First, at step 90 the DTMF/voice sensor in the FAX server is initiated. Next, a wait loop including steps 92 and 94 is entered. At step 92, the server waits for a tone. At step 94, control is passed back to step 92 if no tone is detected.

If a DTMF/voice response is detected, control is passed to step 96, where the DTMF tone or spoken word is decoded. Next, at step 98, the tone or spoken word is interpreted and a responsive FAX message to send to the caller is identified by its location in memory, i.e., on disk 44, so that the FAX server may send it to the caller. Control is passed from step 98 to step 66 of FIG. 3. From there, the FAX identified by the caller is sent to the caller in step 70 of FIG. 3.

Those of ordinary skill in the art will recognize that appropriate circuitry for performing the process illustrated in FIG. 5 must be included in the FAX server of the present invention. For convenience, such circuitry is shown in block form at block 86 located within FAX board 50 in FIGS. 2 and 4. Those of ordinary skill in the art will recognize that conventional circuitry for performing these functions is readily available. Whether or not such circuitry is physically located on FAX board 50 is immaterial.

Another extension to the described embodiments allows a FAX server to access data on other general purpose computers using appropriate adapter cards and programming. The fetched data can be dynamically formatted into CCITT Recommendation T.4 facsimile format while the caller waits on the line. The FAX message can be transmitted when the CCITT Recommendation T.4 facsimile formatting is complete.

Another extension to the described embodiments allows callers to transmit facsimile messages to a server. The server could then apply the OCR and OMR analysis to the received message. Techniques for performing this function are known in the art and are outlined, for example, in Baran et al. The server could then transmit an appropriate response to the caller independent of any CCITT T.30 time out consideration.

The CCITT Recommendation T.30 allows a manual call release to release calls after entering Phase E (Call Release). The present invention therefore teaches there is significant and novel advantage in not using automatic call release after entering Phase E. By not automatically releasing calls after entering Phase E, FAX servers can continue to interact on a single call with callers that call from FAX machines with integrated handsets or with attached telephones. These interactions can include multiple subsequent FAX transmissions and receptions.

By not automatically releasing calls after entering Phase E, FAX servers avoid elaborate, high cost, complex approaches that have resulted in non-solutions to a problem that can be avoided, hence reduced to a non-problem. This is a major new operative result. FAX callers benefit because they no longer need to use esoteric turn around polling features on FAX machines. FAX callers also benefit because they can make a single call that costs less than several shorter calls to FAX servers because of the prevailing billing methods of telephone service providers. FAX server owners benefit because they no longer have to pay for calls to deliver facsimile messages ordered by customers. FAX server owners also avoid the problems of futilely trying to match CSID of FAX machines so that information can be retrieved by a FAX machine that was requested on an earlier call.

In other words, by using a manual call release emulation approach and call release provisions that are in addition to, but distinct from, simple entry to Phase E, the manual call release emulation approach sweeps away the tyranny of CCITT Recommendation T.30 time-outs. The adaptation of the T.30 protocol to FAX servers provided by the present invention avoids the prior art drawbacks requiring line turn around or call backs to achieve facsimile delivery.

On all FAX transmissions or receptions, the FAX server of the present invention remains passive with respect to initiating a turn around, resulting in a simplified usage environment for the caller. The caller typically needs only to keep the phone handset off-hook to regain communication with a FAX Server after FAX message transmission. This significant advance is fully compliant with CCITT Recommendation T.30 and is totally non-disruptive. It also avoids the annoying side effects (i.e., beeping) which typically accompany a FAX- server-initiated turn around that can be confused with FAX protocol errors. In addition, it bypasses the unnecessarily complex Non Standard Facilities (NSF) techniques suggested by Baran et al. The ability of the present invention to continuously interact with the caller greatly facilitates the functionality of FAX servers.

For example, computer transactions typically require several interactions with a computer. With a manual call release emulation approach, a caller can direct a FAX server that connects to a general purpose computer to repetitively interact with the general purpose computer and deliver the several results via FAX as they are generated. This capability is not presently achievable in FAX server technology.

As another example, FAX server administrators can repetitively load multiple FAX messages on a FAX server on a single telephone call. This results in a major advance in the ease of administering a FAX server. Moreover, the manual call release emulation approach solves the impenetrable problems associated with the prior art.

For example, the present invention enables a significant extension of the technology disclosed by Baran et al. Using the FAX server of the present invention, callers can transmit a FAX to the FAX server for OCR and OMR analysis. After receiving the FAX, a FAX server according to the present invention can analyze the message without the restraint imposed by the six-second dynamic turn around CCITT Recommendation T.30 time out. The FAX server can subsequently return a response FAX on its own timetable, independent of any T.30 timing consideration.

Finally, the rapid response of push-button telephones can now be more fully exploited by FAX servers since multiple short duration interactions can occur without having to recontact the FAX server. Approaches such as Baran et al. require callers to make lengthy FAX transmissions to servers and actually teach away from DTMF push-button FAX servers. However, the present invention takes advantage of the fact that DTMF push-button FAX servers actually offer speedier interactions with FAX servers in most instances. Therefore, the FAX server of the present invention incorporating manual call release emulation opens up vast new markets within unexploited interactive FAX market segments that have been here-to-for constrained by a lack of technical capabilities.

While illustrative embodiments and applications of this invention have been shown and described, it would be apparent to those skilled in the art that many more modifications than mentioned above are possible without departing from the inventive concepts herein. The invention, therefore, is not to be restricted except in the spirit of the appended claims.

## Claims

1. A FAX server apparatus for receiving transmitted information from a CCITT FAX transceiver with associated telephone handset, said CCITT FAX transceiver with associated telephone handset being connected to said FAX server via a telephone line, said FAX server comprising:

    CCITT modem means for communicating with said CCITT FAX transceiver, said CCITT modem means including means for manual call release emulation when communicating with said CCITT FAX transceiver;

    memory means for storing information which said FAX server may receive from said CCITT FAX transciever;

    control means, co-operating with said CCITT modem means and said memory means, for directing their operation.

2. The FAX server apparatus of claim 1 further including prompting means for supplying an audio prompt to a user over said telephone line.

3. The FAX server of claim 2, further including DTMF detection means, co-operating with said control means and responsive to responses keyed into said telephone in response to said audio prompt, for identifying information transmitted by said user to be stored in said memory means.

4. The FAX server of claim 2, further including voice detection means, co-operating with said control means and responsive to vocal responses spoken into said telephone by said caller in response to said audio prompt, for identifying information transmitted by said user to be stored in said memory means.

5. A FAX server apparatus for transmitting information to a CCITT FAX transceiver with associated telephone set, said CCITT FAX transceiver with associated telephone set being connected to said FAX server via a telephone line, said FAX server comprising:
   CCITT modem means for communicating with said CCITT FAX transceiver, said CCITT modem means including means for manual call release emulation when communicating with said CCITT FAX transceiver;
   memory means for storing information which said FAX server may deliver to said CCITT FAX transciever using said CCITT modem;
   retrieval means for retrieving said information from said memory means;
   control means, co-operating with said CCITT modem means, said memory means, and said retrieval means, for controlling their operation.

6. The FAX server apparatus of claim 5 further including prompting means for supplying an audio prompt to a user over said telephone line.

7. The FAX server of claim 6, further including DTMF detection means, co-operating with said control means and responsive to responses keyed into said telephone in response to said audio prompt, for selecting information stored in said memory means to be transmitted to said user.

8. The FAX server of claim 6, further including voice detection means, co-operating with said control means and responsive in vocal responses spoken into said telephone by said caller in response to said audio prompt, for selecting information stored in said memory means to be transmitted to said user.

Figure 1

48

50

DTMF/Voice
Decoder

86

FAX
Board

32

# BUS

30

Processor

34

ROM

38

RAM

36

Keyboard

40

CRT

42

Hard Disk

44

Diskette Drive

46

# Figure 2

60 START

62 Wait For Call

64 Answer Call

66 Perform Optional Activity Other Than FAX Transmission or Reception?

Yes · No

68 Perform Optional Non FAX Activity

70 Perform FAX Activity without Automatic Call Release

72 Hang Up on Caller?

No · Yes

74 Perform Manual Call Release Emulation

# Figure 3

Figure 4

90
┌─────────────────┐
│   Initialize    │
│   DTMF/Voice    │
│     Sensor      │
└─────────────────┘

92
┌─────────────────┐
│    Wait For     │
│ Voice/DTMF Tone │
└─────────────────┘

94
┌─────────────────┐
│ Voice/Tone Present? │
└─────────────────┘
  No          Yes

96
┌─────────────────┐
│ Decode Voice/Tone │
└─────────────────┘

98
┌─────────────────┐
│ Interpret Voice/Tone │
│   To Identify   │
│  Associated FAX │
│     Message     │
└─────────────────┘

# Figure 5